# EUROPÄISCHE PATENTSCHRIFT

(11) **EP 3 210 399 B1**
(45) Veröffentlichungstag und Bekanntmachung des Hinweises auf die Patenterteilung: **31.01.2018**
(21) Anmeldenummer: 15784611.4
(22) Anmeldetag: 16.10.2015
(51) Int. Cl.: H04W 4/04, H04L 29/06, H04L 29/08, H04L 12/741

(54) **VERFAHREN ZUM HANDHABEN EINER EMPFANGENEN FAHRZEUG-ZU-X-NACHRICHT IN EINEM FAHRZEUG, FAHRZEUG-ZU-X-KOMMUNIKATIONSMODUL UND SPEICHERMEDIUM**
METHOD FOR HANDLING A RECEIVED VEHICLE-TO-X MESSAGE IN A VEHICLE, VEHICLE-TO-X COMMUNICATIONS MODULE AND STORAGE MEDIUM
PROCÉDÉ DE TRAITEMENT, DANS UN VÉHICULE, D'UN MESSAGE VÉHICULE À X REÇU, MODULE DE COMMUNICATION VÉHICULE À X ET SUPPORT D'INFORMATIONS

(30) Priorität: 24.10.2014 DE 102014221726
(43) Veröffentlichungstag der Anmeldung: 30.08.2017
(73) Patentinhaber: Continental Teves AG & Co. OHG, 60488 Frankfurt (DE)
(72) Erfinder: STÄHLIN, Ulrich, 65760 Eschborn (DE); SCHERPING, Richard, 65835 Liederbach am Taunus (DE)
(74) Vertreter: Wagner, Philipp
(86) Internationale Anmeldenummer: PCT/EP2015/074002
(87) Internationale Veröffentlichungsnummer: WO 2016/062629

(56) Entgegenhaltungen:
- WO-A1-2013/004750
- DE-A1-102009 017 731

## Beschreibung

Die Erfindung betrifft ein Verfahren zum Handhaben einer empfangenen Fahrzeug-zu-X-Nachricht in einem Fahrzeug, wobei die Nachricht zumindest einen Kopfteil und einen Hauptteil aufweist. Die Erfindung betrifft des Weiteren ein Fahrzeug-zu-X-Kommunikationsmodul und ein Speichermedium zur Durchführung des Verfahrens.

Fahrzeug-zu-X-Kommunikation, auch als Car-2-X-Kommunikation oder kurz als C2X-Kommunikation bezeichnet, befindet sich derzeit auf dem Weg zur Serieneinführung. Unter Fahrzeug-zu-X-Kommunikation wird dabei insbesondere die Kombination aus Fahrzeug-zu-Fahrzeug-Kommunikation und Fahrzeug-zu-Infrastruktur-Kommunikation verstanden. Insbesondere ist dabei vorgesehen, dass Fahrzeuge in bestimmten Abständen oder auch bei bestimmten Ereignissen Fahrzeug-zu-X-Nachrichten aussenden, welche beispielsweise Informationen über Geschwindigkeit, Position, Kurs, Beschleunigung oder besondere Ereignisse wie beispielsweise Pannen oder Notbremsmanöver beinhalten.

Um empfangene Fahrzeug-zu-X-Nachrichten in einem Fahrzeug auswerten zu können, beispielsweise um mögliche Gefahren für das Fahrzeug erkennen zu können, ist es vorteilhaft, eine besonders genaue Karte der umgebenden Straßen im Fahrzeug verfügbar zu haben. Hierfür können beispielsweise elektronische Straßenkarten verwendet werden, welche auf Daten von Behörden oder auf anderen Quellen basieren und fest im Fahrzeug eingespeichert sind. Nachteilig an der Verwendung solcher Karten ist jedoch, dass sie typischerweise nur mit einer begrenzten Genauigkeit verfügbar sind und des Weiteren nur sporadisch aktualisiert werden, so dass sich ändernde Straßenverläufe oder neu hinzugekommene Straßen, welche beispielsweise auf Baumaßnahmen seit der letzten Aktualisierung beruhen, nicht berücksichtigt werden. Dies kann zu einer falschen Interpretation von Fahrzeug-zu-X-Nachrichten führen. Viele Fahrzeuge besitzen zudem aus Kostengründen keine fest eingespeicherte elektronische Straßenkarte.
Deshalb kann für die Auswertung von Fahrzeug-zu-X-Nachrichten vorteilhaft auf eine selbstlernende Karte zurückgegriffen werden. Eine solche selbstlernende Karte, auch als Roadgraph bezeichnet, kann insbesondere basierend auf Positionsdaten des eigenen Fahrzeugs und auch auf empfangenen Positionsdaten von anderen Fahrzeugen erstellt und aktualisiert werden. Derartige Positionsdaten werden typischerweise durch Positionsbestimmungsverfahren wie Satellitennavigation oder Triangulation in Mobilfunknetzen ermittelt. Dabei kann typischerweise davon ausgegangen werden, dass sich an einer Position, an welcher sich ein Fahrzeug befindet, auch eine Straße befindet. Durch Zusammensetzen von entsprechenden Positionsdaten, beispielsweise in Form einer "Ameisenstraße", können Straßen erkannt werden, welche der selbstlernenden Karte bislang nicht bekannt waren. Ebenso können geänderte Straßenverläufe erkannt werden. Dies erlaubt eine Aktualisierung der selbstlernenden Karte in Echtzeit, was für die Auswertung von Fahrzeug-zu-X-Kommunikationsdaten einen deutlich Vorteil bedeutet.

Weiterhin offenbart Dokument WO 2013/004750 ein Datenauswahlverfahren zur Verminderung des Dekodierrechenaufwands eines Fahrzeug-zu-X- Kommunikationssystems wobei die Fahrzeug-zu-X-Botschaften einen Nutzdatenanteil und jeweils einen Kopfdatenanteil umfassen, wobei der Kopfdatenanteil unkodiert und der Nutzdatenanteil kodiert übertragen wird, wobei auf Grundlage des Kopfdatenanteils eine Gewichtung von empfangenen Fahrzeug-zu-X-Botschaften untereinander in wenigstens zwei Kategorien vorgenommen wird, wobei eine Dekodierung des Nutzdatenanteils gewichtungsabhängig erfolgt.

Die Erfinder der vorliegenden Anmeldung haben jedoch erkannt, dass für die Erstellung einer selbstlernenden Karte wesentlich mehr empfangene Fahrzeug-zu-X-Nachrichten ausgewertet werden sollten als für andere Anwendungen der Fahrzeug-zu-X-Kommunikation. Bei der aus dem Stand der Technik bekannten Vorgehensweise, bei welcher alle im Fahrzeug zu verarbeitenden Nachrichten vollständig ausgewertet werden, bedeutet dies einen erheblichen Rechenaufwand, welcher auch bei hohen installierten Rechenkapazitäten nur schwierig zu bewältigen ist. Dies liegt insbesondere daran, dass der Hauptteil einer jeweiligen Fahrzeug-zu-X-Nachricht typischerweise codiert ist, insbesondere mittels ASN.1-Codierung codiert ist, und erst in einem aufwändigen Verfahren decodiert werden muss, bevor er ausgewertet werden kann. Ohne eine signifikante Änderung des aus dem Stand der Technik bekannten Vorgehens könnte deshalb die Erstellung einer selbstlernenden Karte an der hierfür benötigten Rechenkapazität scheitern. Dies gilt insbesondere für günstige Fahrzeuge, bei welchen die mit der Verwendung einer hohen Rechenkapazität verbundenen Kosten nicht akzeptabel wären. Für den Erfolg der Fahrzeug-zu-X-Kommunikation ist es aber gerade erforderlich, möglichst schnell eine Marktdurchdringung über alle Fahrzeugkategorien zu erreichen.

Es ist deshalb eine Aufgabe der Erfindung, ein Verfahren zum Handhaben einer empfangenen Fahrzeug-zu-X-Nachricht in einem Fahrzeug bereitzustellen, welches die Erstellung einer selbstlernenden Karte auch mit geringer Rechenkapazität ermöglicht. Es ist des Weiteren eine Aufgabe der Erfindung, ein Fahrzeug-zu-X-Kommunikationsmodul bereitzustellen, welches dazu ausgebildet ist, ein solches Verfahren auszuführen. Des Weiteren ist es eine Aufgabe der Erfindung, ein nichtflüchtiges computerlesbares Speichermedium bereitzustellen, welches Programmcode enthält, bei dessen Ausführung durch einen Prozessor ein solches Verfahren ausgeführt wird.

Dies wird erfindungsgemäß durch ein Verfahren nach Anspruch 1, ein Verfahren nach Anspruch 6, ein Fahrzeug-zu-X-Kommunikationsmodul nach Anspruch 14 und ein Speichermedium nach Anspruch 15 erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Handhaben einer empfangenen Fahrzeug-zu-X-Nachricht in einem Fahrzeug, wobei die Nachricht zumindest einen Kopfteil und einen Hauptteil aufweist. Das Verfahren weist erfindungsgemäß folgende Schritte auf:
- Ermitteln, ob die Nachricht verkürzt verarbeitbar ist,
- wenn die Nachricht verkürzt verarbeitbar ist:
   Weiterleiten des Kopfteils ohne den Hauptteil an eine selbstlernende Karte,
- wenn die Nachricht nicht verkürzt verarbeitbar ist:
   Weiterleiten des Kopfteils mit dem Hauptteil an die selbstlernende Karte.

Mittels des erfindungsgemäßen Verfahrens werden empfangene Fahrzeug-zu-X-Nachrichten zunächst klassifiziert, bevor diese weitergeleitet oder weiterverarbeitet werden. Die Erfinder haben dabei erkannt, dass bei einer Vielzahl von empfangenen Fahrzeug-zu-X-Nachrichten eine Verarbeitung des Kopfteils ausreichend ist, so dass der Hauptteil nicht zwingend weiterverarbeitet werden muss. Die für die Verarbeitung, beispielsweise für die Decodierung des Hauptteils notwendige Rechenkapazität kann auf diese Weise eingespart werden, ohne auf die Verwendung aller empfangenen Nachrichten für die Erstellung einer selbstlernenden Karte verzichten zu müssen.

Bei einer Fahrzeug-zu-X-Nachricht, welche mittels des erfindungsgemäßen Verfahrens verarbeitet werden kann, handelt es sich typischerweise um eine Nachricht, welche von einem anderen Fahrzeug ausgesendet wurde. Diese Nachricht enthält typischerweise zumindest Positionsdaten dieses anderen Fahrzeugs. In typischen Implementierungen von Fahrzeug-zu-X-Kommunikationssystemen werden derartige Nachrichten direkt zwischen den Fahrzeugen ausgetauscht, was insbesondere bedeutet, dass eine Vermittlung durch ein Mobilfunknetz oder eine andere externe Infrastruktur nicht nötig ist.

Es sei verstanden, dass die Nachricht außer dem Kopfteil und dem Hauptteil auch noch weitere Teile aufweisen kann.

Der Kopfteil enthält typischerweise Informationen wie Position, Geschwindigkeit und Kurs des sendenden Fahrzeugs und kann beispielsweise zusätzlich Informationen wie eine Identifikation des Fahrzeugs oder einen Nachrichtentyp enthalten. Beispielsweise kann mittels eines Nachrichtentyps 2/0/0 angezeigt werden, dass es sich um eine Cooperative Awareness Message (CAM) in Form einer Statusmeldung handelt, oder es kann mittels eines Nachrichtentyps 3/99/1 angezeigt werden, dass es sich um eine Decentralized Environment Notification Message (DENM) in der Form einer Warnung vor einem stark bremsenden Fahrzeug handelt. Es sei verstanden, dass der Kopfteil auch eine beliebige Auswahl der genannten Informationen oder auch weitere Informationen umfassen kann. Der Kopfteil kann auch als Header bezeichnet werden. Er wird typischerweise nicht codiert, liegt also im Klartext vor.

Der Hauptteil ist typischerweise mittels ASN.1 codiert. Er enthält typischerweise weitergehende Informationen, beispielsweise Informationen für bestimmte Anwendungen. Dabei kann es sich beispielsweise um Informationen wie Beschleunigung, Verzögerung, Lenkradwinkel oder Typ des Fahrzeugs handeln. Diese Informationen sind jedoch typischerweise nur durch einen verhältnismäßig aufwändigen Decodiervorgang zugänglich.

Unter einer verkürzt verarbeitbaren Nachricht kann insbesondere eine Nachricht verstanden werden, bei welcher es außerhalb der selbstlernenden Karte keinen Grund für eine Decodierung oder sonstige Verarbeitung des Hauptteils gibt. Die Klassifizierung kann beispielsweise wie weiter unten beschrieben vorgenommen werden.

Die selbstlernende Karte kann beispielsweise in einer elektronischen Einheit ausgeführt werden, welche auch das erfindungsgemäße Verfahren ausführt. Sie kann jedoch beispielsweise auch in einer anderen elektronischen Einheit ausgeführt werden, welche beispielsweise mit der das Verfahren ausführenden elektronischen Einheit gekoppelt ist. Dazu kann insbesondere ein Fahrzeug-Bus-System, beispielsweise ein CAN-Bus-System, verwendet werden.

Gemäß einer Ausführung wird beim Schritt des Ermittelns überprüft, ob die Nachricht für Anwendungen im Fahrzeug relevant ist. Bei solchen Anwendungen kann es sich beispielsweise um Anwendungen handeln, welche einen Fahrer vor etwaigen Liegenbleibern oder anderen Gefahrenstellen warnen können. Es hat sich gezeigt, dass eine Klassifizierung danach, ob eine Relevanz für Anwendungen im Fahrzeug besteht, für den Schritt des Ermittelns zu besonders vorteilhaften Ergebnissen führt.

Gemäß einer Ausführung ist die Nachricht nicht verkürzt verarbeitbar, wenn die Nachricht für zumindest eine Anwendung im Fahrzeug relevant ist. Dies kann anders ausgedrückt bedeuten, dass eine Weiterverarbeitung durch mindestens eine Anwendung im Fahrzeug erfolgen wird, so dass eine vollständige Verarbeitung der Nachricht typischerweise nötig ist und eine verkürzte Verarbeitung nicht in Betracht kommt. Wenn die Nachricht für keine Anwendung im Fahrzeug relevant ist, kann die Nachricht hingegen verkürzt verarbeitbar sein. In diesem Fall kann auf eine Verarbeitung insbesondere des Hauptteils der Nachricht typischerweise verzichtet werden. Es besteht in diesem Fall somit keine Notwendigkeit, diesen zu decodieren.

Wenn der Hauptteil decodiert wurde, wird er bevorzugt decodiert an die selbstlernende Karte weitergeleitet. Damit kann die selbstlernende Karte unter Umständen noch weitere Informationen aus der Nachricht erhalten, welche sie zur Verbesserung der Informationen über die Straßen oder andere wichtige Elemente verwenden kann. Wenn eine Nachricht nicht decodiert wurde, beispielsweise weil sie nicht für eine Anwendung relevant ist, so kann jedoch typischerweise trotzdem der Kopfteil ausgewertet werden. Dieser enthält zwar nur weniger Informationen, was jedoch eine Verwendung der Nachricht in der selbstlernenden Karte nur geringfügig beeinträchtigt.

Die Erfindung betrifft des Weiteren ein Verfahren zum Handhaben einer empfangenen Fahrzeug-zu-X-Nachricht in einem Fahrzeug, wobei die Nachricht zumindest einen Kopfteil und einen Hauptteil aufweist. Das Verfahren weist erfindungsgemäß folgenden Schritt auf:
- Weiterleiten des Kopfteils ohne den Hauptteil an eine selbstlernende Karte unabhängig davon, ob die Nachricht verkürzt verarbeitbar ist.

Mittels dieser Ausführung eines erfindungsgemäßen Verfahrens kann die Signalverarbeitung noch weiter vereinfacht werden, wobei die Funktionalität der selbstlernenden Karte trotzdem weitgehend erhalten bleibt. Auf eine Ermittlung, ob die Nachricht verkürzt verarbeitbar ist, kann gemäß einer Ausführung verzichtet werden. Sie kann jedoch auch durchgeführt und für andere Zwecke verwendet werden, beispielsweise um zu ermitteln ob die Nachricht an eine Anwendungsschicht weitergeleitet werden soll, also beispielsweise ob sie für zumindest eine Anwendung im Fahrzeug relevant ist.

Wenn die Nachricht für zumindest eine Anwendung im Fahrzeug relevant ist, wird sie bevorzugt an eine Anwendungsschicht weitergeleitet. Diese Anwendungsschicht kann ein Softwaremodul oder auch ein separates Hardwaremodul sein, wobei in der Anwendungsschicht die entsprechenden Anwendungen ausgeführt werden, welche dann beispielsweise bei Erkennen einer Kollisionsgefahr den Fahrer warnen können.

Bevorzugt weist das Verfahren vor einer Weiterleitung der Nachricht an eine Anwendungsschicht einen Schritt des Decodierens des Hauptteils auf. Insbesondere kann hierfür eine Decodierung nach ASN.1 verwendet werden. Damit sind die in dem Hauptteil der Nachricht enthaltenen Informationen, welche typischerweise über die in dem Kopfteil enthaltenen Informationen hinausgehen, zugänglich. Sie können typischerweise von entsprechenden Anwendungen im Fahrzeug verwendet werden.

Wenn die Nachricht verkürzt verarbeitbar ist, wird der Hauptteil bevorzugt nicht decodiert. Damit kann Rechenleistung eingespart werden. Wie die Erfinder erkannt haben, ist ein erheblicher Teil der in der Praxis empfangenen Fahrzeug-zu-X-Nachrichten verkürzt verarbeitbar, wenn auf sinnvolle Erkennungsalgorithmen zurückgegriffen wird. Dies erlaubt die Verwendung einer selbstlernenden Karte ohne das Erfordernis, besonders leistungsfähige Recheneinheiten zu installieren.

Gemäß einer Ausführung wird die Nachricht ferner an einen Stack weitergeleitet, wenn eine Weiterverarbeitung durch den Stack erforderlich ist, insbesondere aufgrund eines Standards. Bei einer solchen Weiterverarbeitung kann es sich beispielsweise um eine Aussendung der empfangenen Nachricht handeln. Dies kann beispielsweise als Hopping bezeichnet werden und kommt beispielsweise bei Decentralized Environment Notification Messages (DENMs) vor, welche typischerweise über Gefahrensituationen informieren und deshalb eine möglichst weite Verbreitung finden sollen. Das Fahrzeug kann dabei beispielsweise als Relais fungieren, welches die Nachricht an andere Verkehrsteilnehmer weiter verbreitet. Ein solcher Stack kann beispielsweise eine Funktion sein, welche ein solches Weitersenden übernimmt.

Es sei verstanden, dass die selbstlernende Karte hier nicht als Anwendung angesehen wird, sondern vielmehr unter den hier beschriebenen Anwendungen solche verstanden werden, welche von der selbstlernenden Karte verschieden sind.

Das Verfahren wird bevorzugt derart ausgeführt, dass der Kopfteil der Nachricht in jedem Fall an die selbstlernende Karte weitergeleitet wird. Dieses Vorgehen basiert auf der Erkenntnis, dass der Kopfteil der Nachricht in nahezu jedem Fall dazu dienen kann, die in der selbstlernenden Karte vorhandenen Daten über Straßen zu verbessern. Der Kopfteil ist typischerweise auch ohne besonderen Rechenaufwand zugänglich. Ob der Hauptteil mit übermittelt wird, hängt hingegen typischerweise davon ab, ob die Nachricht verkürzt verarbeitbar ist.

Eine Anwendungsschicht kann der selbstlernenden Karte nachgelagert sein, so dass die Nachricht über die selbstlernende Karte an die Anwendungsschicht weitergegeben wird. In einer solchen Implementierung kann beispielsweise bereits in der selbstlernenden Karte überprüft werden, ob die Nachricht angesichts der in der selbstlernenden Karte gespeicherten Informationen über Straßen für das Fahrzeug relevant ist, also beispielsweise ob die Nachricht vor einer tatsächlich bestehenden Kollisionsgefahr warnt. Entsprechende Informationen können dann gleich von der selbstlernenden Karte an die Anwendungsschicht mit weitergegeben werden.

Alternativ hierzu kann die Anwendungsschicht auch parallel zur selbstlernenden Karte angeordnet sein, so dass die Nachricht parallel und/oder unabhängig von der Weiterleitung an die Anwendungsschicht an die selbstlernende Karte weitergeleitet wird. Dies kann insbesondere bedeuten, dass die selbstlernende Karte die Nachricht gleichzeitig oder nahezu gleichzeitig mit der Anwendungsschicht erhält, und dass die Anwendung bzw. die Anwendungsschicht sich gegebenenfalls Informationen von der selbstlernenden Karte separat besorgt, wenn diese zur Beurteilung der Relevanz der empfangenen Nachricht notwendig sind.

Bei der Weitergabe von Nachrichten an die selbstlernende Karte können im Rahmen einer Vorverarbeitung entstandene Informationen wie beispielsweise Abstände in Koordinaten des eigenen Fahrzeugs (Egofahrzeugkoordinaten) oder Ergebnisse von Plausibilitätsprüfungen an die selbstlernende Karte weitergegeben werden, ohne ein normales Interface bzw. eine normale Schnittstelle zu einem normalen Stack modifizieren zu müssen.

Die Erfindung betrifft des Weiteren ein Fahrzeug-zu-X-Kommunikationsmodul, welches dazu ausgebildet ist, ein erfindungsgemäßes Verfahren auszuführen. Hinsichtlich des Verfahrens kann auf alle beschriebenen Ausführungen und Varianten zurückgegriffen werden. Erläuterte Vorteile gelten entsprechend. Das Fahrzeug-zu-X-Kommunikationsmodul kann insbesondere als Mikrocontroller, Mikroprozessor, freiprogrammierbarer Computer oder sonstige freiprogrammierbare Einheit, speicherprogrammierbare Steuerung (SPSS) oder anwendungsspezifischer integrierter Schaltkreis (ASIC) ausgeführt sein. Insbesondere kann das Fahrzeug-zu-X-Kommunikationsmodul Prozessormittel und Speichermittel enthalten, wobei in den Speichermitteln Programmcode gespeichert ist, bei dessen Ausführung durch die Prozessormittel ein erfindungsgemäßes Verfahren ausgeführt wird.

Es sei verstanden, dass das erfindungsgemäße Verfahren vorzugsweise in einem Fahrzeug-zu-X-Kommunikationsmodul oder in einer anderen elektronischen Einrichtung ausgeführt wird. Des Weiteren sei verstanden, dass das Verfahren typischerweise vielfach wiederholt hintereinander ausgeführt wird, wenn es in einem Fahrzeug verwendet wird.

Die Erfindung betrifft des Weiteren ein nichtflüchtiges computerlesbares Speichermedium, welches Programmcode enthält, bei dessen Ausführung durch einen Prozessor ein erfindungsgemäßes Verfahren ausgeführt wird. Auch hierbei kann auf alle beschriebenen Ausführungen und Varianten des Verfahrens zurückgegriffen werden.

Weitere Merkmale und Vorteile wird der Fachmann dem nachfolgend mit Bezug auf die beigefügte Zeichnung beschriebenen Ausführungsbeispiel entnehmen. Dabei zeigen:
- Fig. 1:: eine Matrix mit vier Möglichkeiten der Verarbeitung einer Nachricht gemäß einem ersten Ausführungsbeispiel,
- Fig. 2:: eine Matrix mit vier Möglichkeiten der Verarbeitung einer Nachricht gemäß einem zweiten Ausführungsbeispiel.

Sowohl gemäß dem ersten wie auch dem zweiten Ausführungsbeispiel wird zunächst eine Vorverarbeitung 10 durchgeführt, bei welcher erkannt wird, ob die empfangene Nachricht verkürzt verarbeitbar ist. Die Nachricht enthält in jedem Fall einen Kopfteil und einen Hauptteil, wobei der Kopfteil in Klartext verfügbar ist, wohingegen der Hauptteil ASN.1-codiert ist und somit erst nach einer aufwändigen Decodierung zugänglich ist. Im Rahmen der Vorverarbeitung 10 wird insbesondere ermittelt, ob die Nachricht für zumindest eine Anwendung im Fahrzeug relevant ist. Wenn dies der Fall ist, so ist die Nachricht nicht verkürzt verarbeitbar. Wenn die Nachricht jedoch für keine Anwendung im Fahrzeug relevant ist, so ist sie verkürzt verarbeitbar.

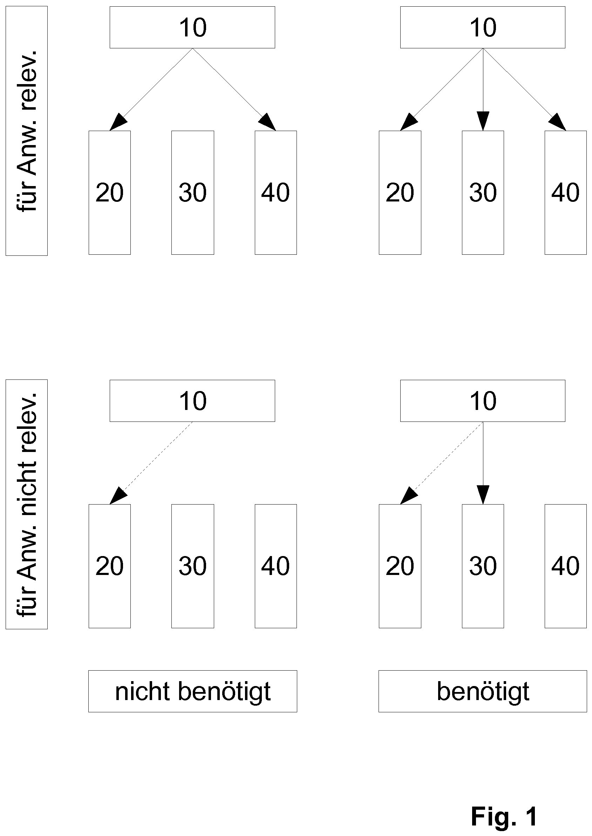

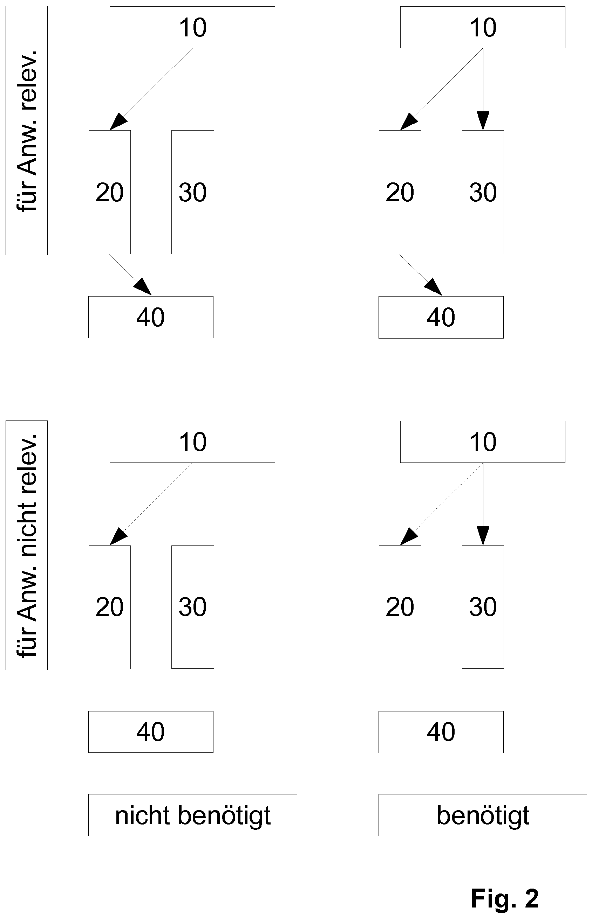

In den in Fig. 1 und Fig. 2 dargestellten Matrizen sind jeweils vier Zustände gezeigt. Jedem Zustand ist dabei ein Feld zugeordnet. In den beiden oberen Feldern ist der Fall gezeigt, in welchem die Nachricht für zumindest eine Anwendung relevant ist, also nicht verkürzt verarbeitbar ist. In den beiden unteren Feldern ist der Fall gezeigt, in welchem die Nachricht für keine Anwendung relevant ist, und somit verkürzt verarbeitbar ist. Die beiden jeweiligen Zeilen unterscheiden sich demgegenüber dahingehend, ob die Nachricht für eine Weiterverarbeitung durch einen Stack benötigt wird oder nicht benötigt wird. Ersterer Fall ist in den beiden jeweiligen rechten Feldern dargestellt, wohingegen letzterer Fall in den beiden jeweiligen linken Feldern dargestellt ist.

Wie gezeigt wird die Nachricht in jedem Fall an eine selbstlernende Karte 20 weitergeleitet. Wenn die Anwendung nicht verkürzt verarbeitbar ist, so wird sie im Rahmen der Vorverarbeitung 10 bereits decodiert und vollständig an die selbstlernende Karte 20 weitergeleitet. Wenn die Nachricht hingegen verkürzt verarbeitbar ist, so wird lediglich ihr Kopfteil, nicht jedoch der Hauptteil an die selbstlernende Karte 20 weitergegeben. Der Unterschied zwischen diesen beiden Arten der Weitergabe ist in den Fig. 1 und 2 dadurch dargestellt, dass die vollständige Weitergabe mit einem durchgezogenen Pfeil dargestellt ist, wohingegen die Weitergabe lediglich des Kopfteils mit einem gestrichelten Pfeil dargestellt ist.

Es ist zudem möglich, grundsätzlich ausschließlich den Kopfteil der Nachricht an die selbstlernende Karte 20 weiterzugeben. Dies führt zu einer vereinfachten selbstlernenden Karte 20 und ist in der Zeichnung nicht explizit dargestellt, gilt jedoch als Ausführungsbeispiel der Erfindung.

Die selbstlernende Karte 20 verwendet die Nachricht zum Aktualisieren von Straßenverläufen und auch zum Erkennen von neu hinzugekommenen Straßen. Dies erlaubt eine vorteilhafte Erstellung und Aktualisierung von Kartenmaterial, ohne auf externe Einspielungen angewiesen zu sein.

Wenn die Nachricht für eine Weiterverarbeitung benötigt wird, so wird sie des Weiteren an einen Stack 30 weitergeleitet. Dieser sorgt dann für eine entsprechende Weiterverarbeitung, insbesondere gemäß einem Standard, was beispielsweise eine Wiederaussendung der Nachricht bedeuten kann. Dies kann beispielsweise bei Decentralized Environment Notification Messages (DENMs) erfolgen, welche als Gefahrenmeldungen möglichst weit verbreitet werden sollen. Hingegen können Cooperative Awareness Messages (CAMs) typischerweise derart verarbeitet werden, dass sie lediglich im Fahrzeug ausgewertet und nicht weitergesendet werden. In diesem Fall kann auf eine Weiterleitung an den Stack 30 verzichtet werden. An den Stack 30 wird die Nachricht immer nach Vorgabe der Standardisierung, beispielsweise vollständig und auch decodiert weitergegeben.

Sofern die Nachricht für zumindest eine Anwendung relevant ist, wird sie ferner an eine Anwendungsschicht 40 weitergeleitet. Dies erfolgt grundsätzlich in vollständiger Form, wobei der Hauptteil bereits decodiert wurde. Hierbei unterscheiden sich nun die beiden Ausführungsbeispiele, wie in den beiden Figuren zu sehen ist. Bei dem in Fig. 1 dargestellten ersten Ausführungsbeispiel wird die Nachricht gleichzeitig bzw. parallel an die selbstlernende Karte 20 und an die Anwendungsschicht 40 weitergeleitet. Die Nachricht wurde also noch nicht von der selbstlernenden Karte 20 bearbeitet, wenn sie von der Anwendungsschicht 40 empfangen wird. Die Anwendungsschicht 40 überprüft dann typischerweise, ob die Nachricht eine bestimmte relevante Information für das Fahrzeug beinhaltet, wozu sie beispielsweise separat auf die selbstlernende Karte 20 zugreifen kann. Dies ist in den Figuren nicht dargestellt. Beispielsweise kann die Anwendungsschicht 40 auf die selbstlernende Karte 20 zugreifen, um zu überprüfen, ob die Nachricht von einem Fahrzeug ausgesandt wurde, welches sich auf der gleichen Straße befindet wie das Fahrzeug, welches das erfindungsgemäße Verfahren ausführt.

Bei dem in Fig. 2 dargestellten zweiten Ausführungsbeispiel wird die Nachricht grundsätzlich zunächst an die selbstlernende Karte 20 und von dort aus an die Anwendungsschicht 40 weitergeleitet. Dabei kann die selbstlernende Karte 20 bereits selbsttätig überprüfen, ob gewisse Informationen für die weitere Verarbeitung der Nachricht in der Anwendungsschicht 40 nötig sind. Beispielsweise können hierfür Informationen über einen Straßenverlauf nötig sein. Derartige Informationen kann die selbstlernende Karte 20 dann bereits mit der Nachricht an die Anwendungsschicht 40 weiterleiten, so dass diese die Nachricht bereits in einer Form erhält, in welcher sie um von der selbstlernenden Karte 20 gelieferte Informationen angereichert ist.

Es sei verstanden, dass in der Praxis die meisten empfangenen Nachrichten bei der Fahrzeug-zu-X-Kommunikation für keine Anwendung im Fahrzeug relevant sind und somit verkürzt verarbeitet werden können. In den meisten Fällen kann somit auf die Decodierung des Hauptteils der jeweiligen Nachricht verzichtet werden. Dies spart in erheblicher Weise Rechenkapazität ein. Der Betrieb einer selbstlernenden Karte 20 ist somit auch mit geringer Rechenkapazität möglich.

Sofern von den Nachrichten grundsätzlich nur der Kopfteil an die selbstlernenden Karte weitergeleitet wird, ist die Verwendung der in Fig. 1 dargestellten Ausführung vorteilhaft, in welcher die Nachricht unabhängig voneinander an die Anwendungsschicht 40 und die selbstlernende Karte 20 weitergeleitet wird. Dies vermeidet, dass eventuell notwendige Informationen bei der Anwendungsschicht 40 nicht ankommen.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden. Die Erfindung schließt jedoch Fahrzeug-zu-X-Kommunikation mit Vermittlung beispielsweise über ein Mobilfunknetz explizit nicht aus.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Verfahren zum Handhaben einer empfangenen Fahrzeug-zu-X-Nachricht in einem Fahrzeug,
wobei die Nachricht zumindest einen Kopfteil und einen Hauptteil aufweist, **dadurch gekennzeichnet dass** das Verfahren folgende Schritte aufweist:
- Ermitteln (10), ob die Nachricht verkürzt verarbeitbar ist,
- wenn die Nachricht verkürzt verarbeitbar ist: Weiterleiten des Kopfteils ohne den Hauptteil an eine selbstlernende Karte (20),
- wenn die Nachricht nicht verkürzt verarbeitbar ist: Weiterleiten des Kopfteils mit dem Hauptteil an die selbstlernende Karte (20).

2. Verfahren nach Anspruch 1,
- wobei beim Schritt des Ermittelns überprüft wird, ob die Nachricht für Anwendungen im Fahrzeug relevant ist.

3. Verfahren nach Anspruch 2,
- wobei die Nachricht nicht verkürzt verarbeitbar ist, wenn die Nachricht für zumindest eine Anwendung im Fahrzeug relevant ist.

4. Verfahren nach einem der Ansprüche 2 oder 3,
- wobei die Nachricht verkürzt verarbeitbar ist, wenn die Nachricht für keine Anwendung im Fahrzeug relevant ist.

5. Verfahren nach einem der vorhergehenden Ansprüche,
- wobei der Hauptteil, wenn er decodiert wurde, decodiert an die selbstlernende Karte (20) weitergeleitet wird.

6. Verfahren zum Handhaben einer empfangenen Fahrzeug-zu-X-Nachricht in einem Fahrzeug,
wobei die Nachricht zumindest einen Kopfteil und einen Hauptteil aufweist, **dadurch gekennzeichnet dass** das Verfahren folgenden Schritt aufweist:
- Weiterleiten des Kopfteils ohne den Hauptteil an eine selbstlernende Karte (20) unabhängig davon, ob die Nachricht verkürzt verarbeitbar ist.

7. Verfahren nach einem der vorhergehenden Ansprüche,
- wobei die Nachricht an eine Anwendungsschicht (40) weitergeleitet wird, wenn sie für zumindest eine Anwendung im Fahrzeug relevant ist.

8. Verfahren nach einem der vorhergehenden Ansprüche,
- welches ferner vor einer Weiterleitung der Nachricht an eine Anwendungsschicht einen Schritt des Decodierens des Hauptteils aufweist.

9. Verfahren nach einem der vorhergehenden Ansprüche,
- wobei der Hauptteil, wenn die Nachricht verkürzt verarbeitbar ist, nicht decodiert wird.

10. Verfahren nach einem der vorhergehenden Ansprüche,
- wobei die Nachricht ferner an einen Stack (30) weitergeleitet wird, wenn eine Weiterverarbeitung durch den Stack (30) erforderlich ist, insbesondere aufgrund eines Standards.

11. Verfahren nach einem der vorhergehenden Ansprüche,
- welches derart durchgeführt wird, dass der Kopfteil der Nachricht in jedem Fall an die selbstlernende Karte (20) weitergeleitet wird.

12. Verfahren nach einem der vorhergehenden Ansprüche,
- wobei eine Anwendungsschicht der selbstlernenden Karte (20) nachgelagert ist, so dass die Nachricht über die selbstlernende Karte (20) an die Anwendungsschicht (40) weitergeleitet wird.

13. Verfahren nach einem der Ansprüche 1 bis 11,
- wobei eine Anwendungsschicht (40) parallel zur selbstlernenden Karte (20) angeordnet ist, so dass die Nachricht parallel und/oder unabhängig von der Weiterleitung an die Anwendungsschicht (40) an die selbstlernende Karte (20) weitergeleitet wird.

14. Fahrzeug-zu-X-Kommunikationsmodul,
welches dazu ausgebildet ist, ein Verfahren nach einem der vorhergehenden Ansprüche auszuführen.

15. Nichtflüchtiges computerlesbares Speichermedium, welches Programmcode enthält, bei dessen Ausführung durch einen Prozessor ein Verfahren nach einem der Ansprüche 1 bis 13 ausgeführt wird.

## Claims

1. A method for handling a received vehicle-to-X message in a vehicle,
wherein the message has at least a header and a body,
**characterized in that**
the method comprises the following steps:
- establishing (10) whether the message is suitable for simplified processing,
- if the message is suitable for simplified processing: forwarding of the header without the body to a self-learning map (20),
- if the message is not suitable for simplified processing: forwarding of the header with the body to the self-learning map (20).

2. The method according to Claim 1,
- wherein it is checked during the establishing step whether the message is relevant to applications in the vehicle.

3. The method according to Claim 2,
- wherein the message is not suitable for simplified processing if the message is relevant to at least one application in the vehicle.

4. The method according to any one of Claims 2 or 3,
- wherein the message is suitable for simplified processing if the message is not relevant to an application in the vehicle.

5. The method according to any one of the preceding claims,
- wherein the body, if it has been decoded, is forwarded in the decoded form to the self-learning map (20).

6. A method for handling a received vehicle-to-X message in a vehicle,
wherein the message has at least a header and a body,
**characterized in that**
the method comprises the following step:
- forwarding of the header without the body to a self-learning map (20), irrespective of whether the message is suitable for simplified processing.

7. The method according to any one of the preceding claims,
- wherein the message is forwarded to an application layer (40) if it is relevant to at least one application in the vehicle.

8. The method according to any one of the preceding claims,
- which additionally comprises a step of decoding the body prior to forwarding of the message to an application layer.

9. The method according to any one of the preceding claims,
- wherein the body is not decoded if the message is suitable for simplified processing.

10. The method according to any one of the preceding claims,
- wherein the message is additionally forwarded to a stack (30) if further processing by the stack (30) is required, in particular on the basis of a standard.

11. The method according to any one of the preceding claims,
- which is carried out in such a way that the header of the message is forwarded in any case to the self-learning map (20).

12. The method according to any one of the preceding claims,
wherein an application layer is downstream of the self-learning map (20) such that the message is forwarded by the self-learning map (20) to the application layer (40).

13. The method according to any one of Claims 1 to 11,
wherein an application layer (40) is arranged parallel to the self-learning map (20) such that the message is forwarded to the self-learning map (20) in parallel to and/or independently of the forwarding to the application layer (40).

14. A vehicle-to-X communication module,
which is configured to carry out a method according to any one of the preceding claims.

15. A non-volatile computer-readable storage medium, which contains program code which, when it is run by a processor, causes a method according to any one of Claims 1 to 13 to be executed.

## Revendications

1. Procédé pour le traitement, dans un véhicule, d'un message de véhicule à X reçu,
le message présentant au moins un en-tête et un corps de message,
**caractérisé en ce que**
le procédé présente les étapes suivantes :
- déterminer (10) si le message peut être traité de façon abrégée,
- lorsque le message peut être traité de façon abrégée : réacheminer l'en-tête sans le corps de message à une carte à auto-apprentissage (20),
- lorsque le message ne peut pas être traité de façon abrégée : réacheminer l'en-tête avec le corps de message à la carte à auto-apprentissage (20).

2. Procédé selon la revendication 1,
- le fait de savoir si le message est pertinent pour des applications dans le véhicule étant établi lors de l'étape de détermination.

3. Procédé selon la revendication 2,
- le message ne pouvant pas être traité de façon abrégée lorsque le message est pertinent pour au moins une application dans le véhicule.

4. Procédé selon l'une des revendications 2 ou 3,
- le message pouvant être traité de façon abrégée lorsque le message n'est pertinent pour aucune application dans le véhicule.

5. Procédé selon l'une des revendications précédentes,
- le corps de message étant réacheminé de façon décodée à la carte à auto-apprentissage (20) lorsqu'il a été décodé.

6. Procédé pour le traitement, dans un véhicule, d'un message de véhicule à X reçu,
le message présentant au moins un en-tête et un corps de message,
**caractérisé en ce que**
le procédé présente l'étape suivante :
- réacheminement de l'en-tête sans le corps de message à une carte à auto-apprentissage (20), indépendamment du fait de savoir si le message peut être traité de façon abrégée.

7. Procédé selon l'une des revendications précédentes,
- le message étant réacheminé à une couche application (40) lorsqu'il est pertinent pour au moins une application dans le véhicule.

8. Procédé selon l'une des revendications précédentes,
- lequel présente en outre une étape de décodage du corps de message avant un réacheminement du message à une couche application.

9. Procédé selon l'une des revendications précédentes,
- le corps de message n'étant pas décodé lorsque le message peut être traité de façon abrégée.

10. Procédé selon l'une des revendications précédentes,
- le message étant en outre réacheminé à une pile (30) lorsqu'un post-traitement par la pile (30) est nécessaire, en particulier en raison d'un standard.

11. Procédé selon l'une des revendications précédentes,
- lequel est exécuté de telle sorte que l'en-tête du message est réacheminé dans tous les cas à la carte à auto-apprentissage (20).

12. Procédé selon l'une des revendications précédentes,
- une couche application de la carte à auto-apprentissage (20) étant en amont, de telle sorte que le message est réacheminé à la couche application (40) par la carte à auto-apprentissage (20).

13. Procédé selon l'une des revendications 1 à 11,
- une couche application (40) étant disposée parallèlement à la carte à auto-apprentissage (20) de telle sorte que le message est réacheminé à la carte à auto-apprentissage (20) parallèlement et/ou indépendamment du réacheminement à la couche application (40).

14. Module de communication de véhicule à X,
lequel est formé afin d'exécuter un procédé selon l'une des revendications précédentes.

15. Support mémoire non volatile lisible par ordinateur, lequel contient un code de programme, un procédé selon l'une des revendications 1 à 13 étant exécuté lors de l'exécution dudit code de programme par un processeur.
